# EUROPÄISCHE PATENTSCHRIFT

(11) **EP 1 569 006 B1**
(45) Veröffentlichungstag und Bekanntmachung des Hinweises auf die Patenterteilung: **23.06.2010**
(21) Anmeldenummer: 05003884.3
(22) Anmeldetag: 23.02.2005
(51) Int. Cl.: G01S 3/86, G01S 5/18

(54) **Schallintensitätsdetektor sowie Verfahren zum Messen der Schallintensität**
Detector and method for measuring noise intensity
Détecteur et méthode pour mesure l'intensité du bruit

(30) Priorität: 27.02.2004 DE 102004009644
(43) Veröffentlichungstag der Anmeldung: 31.08.2005
(73) Patentinhaber: Helmut-Schmidt-Universität/ Universität der Bundeswehr Hamburg, 22043 Hamburg (DE)
(72) Erfinder: Drenckhan, Joachim, 20257 Hamburg (DE); Schäfer, Ingo, Dr., 23611 Sereetz (DE); Sachau, Delf, Prof. Dr., 22047 Hamburg (DE)
(74) Vertreter: UEXKÜLL & STOLBERG

(56) Entgegenhaltungen:
- EP-A- 0 581 565
- EP-A- 0 827 134
- EP-A- 1 331 490
- DE-A1- 4 017 936

## Beschreibung

Die Erfindung betrifft einen Schallintensitätsdetektor sowie ein Verfahren zum Messen der Schallintensität einer zu lokalisierenden Schallquelle.

Aus der EP 1 331 490 A1 ist ein System zum Lokalisieren einer Schallquelle bekannt, das mindestens drei oder vier Mikrophone aufweist, die in einer Ebene bzw. räumlich angeordnet sind. Über Phasendifferenzen der Ausgangssignale der Mikrophone kann die Richtung einer Schallquelle bestimmt werden. Auf einem Computerbildschirm lässt sich der mutmaßliche Ort der Schallquelle auf einem Bild anzeigen, das mit Hilfe einer in die Richtung der Schallquelle ausgerichteten Kamera aufgenommen wurde.

Das vorbekannte System ist zum Lokalisieren von Schallquellen konzipiert, die sich in größerer Entfernung befinden. Dabei werden Freifeldbedingungen zum Messen vorausgesetzt, d.h. das System geht davon aus, dass die zu lokalisierende Schallquelle die einzige Schallquelle im Empfangsbereich ist. Das System wird daher durch Störgeräusche beeinflusst, und die Anwendung im Nahbereich, wo einzelne Schallquellen über einen großen Raumwinkelbereich in Erscheinung treten können, ist problematisch.

Die US 6,160,892 offenbart einen aktiven Auspuff, der im Prinzip zum Erzielen einer Schalldämpfung einen Schallintensitätsdetektor mit den Merkmalen des Oberbegriffs der Ansprüche 1 und 8 aufweist.

Aus der EP-A-0 581 565 ist ein elektronisch geregeltes aktives akustisches Abschwächungssystem mit einem Eingangsmikrophon, einem Lautsprecher und einem Mikrophon zum Liefern eines Fehlersignals bekannt.

Die EP-A-0 827 134 zeigt ein Mikrophon, das von einem mehrstufigen Schild vor Strömungsgeräuschen geschützt ist.

Es ist Aufgabe der Erfindung, eine Möglichkeit zu finden, Schallquellen auch im Nahbereich zu lokalisieren und die Schallintensität zu messen.

Diese Aufgabe wird gelöst durch einen Schallintensitätsdetektor mit den Merkmalen des Anspruchs 1 bzw. des Anspruchs 8 sowie durch ein Verfahren zum Messen der Schallintensität einer zu lokalisierenden Schallquelle mit den Merkmalen des Anspruchs 10. Vorteilhafte Ausgestaltungen der Erfindung ergeben sich aus den Unteransprüchen.

Der erfindungsgemäße Schallintensitätsdetektor hat ein erstes Gehäuse, das ein erstes Schallfenster aufweist, mindestens einen im Innenraumbereich des ersten Gehäuses angeordneten ersten Lautsprecher sowie mindestens ein Paar erster Mikrophone im Innenraumbereich des ersten Gehäuses. Ferner ist eine Steuer- und Regeleinrichtung vorgesehen, die dazu eingerichtet ist, mittels des Paares erster Mikrophone Messsignale für den Schallwechseldruck und die Schallschnelle im Innenraumbereich des ersten Gehäuses zu erzeugen und mittels dieser Messsignale den ersten Lautsprecher zur Erzeugung eines Freifeldes im Innenraumbereich des ersten Gehäuses anzusteuern.

Mit Hilfe der beiden ersten Mikrophone werden also der Schallwechseldruck sowie die Schallschnelle (Gradient des Schallwechseldrucks) in einem charakteristischen Bereich im Innenraum des Gehäuses gemessen. Dies ermöglicht es, den Lautsprecher so anzusteuern, dass sich das von dem Lautsprecher erzeugte Schallfeld im Innenraumbereich des Gehäuses mit dem von den beiden Mikrophonen registrierten Schallfeld so überlagert, dass die Reflexionen der einlaufenden Welle ausgelöscht werden. Somit entsteht eine laufende Welle in Richtung des Lautsprechers. Auf diese Weise wird ein Untergrund-Schallpegel eliminiert, und es herrschen Freifeldbedingungen. Bei dem erfindungsgemäßen Schallintensitätsdetektor werden also aktiv Freifeldbedingungen erzeugt.

Nachdem derartige Freifeldbedingungen in dem Schallintensitätsdetektor eingestellt sind, lässt sich eine Schallquelle, insbesondere im Nahbereich, lokalisieren, indem der für die Schallquelle infrage kommende Bereich mit dem Schallintensitätsdetektor abgefahren wird. Sobald das Schallsignal durch das Schallfenster in das Gehäuse eintritt, registrieren die Mikrophone den Schallwechseldruck, und über die Steuer- und Regeleinrichtung wird ein entsprechendes Signal erzeugt.

Da der Schallwechseldruck und die Schallschnelle im Innenraumbereich des Gehäuses nicht konstant sind, erhöht sich die Genauigkeit des Schallintensitätsdetektors, wenn im Innenraumbereich des Gehäuses weitere Mikrophone und/oder weitere Lautsprecher angeordnet sind und mit der Steuer- und Regeleinrichtung in Verbindung stehen.

Der erfindungsgemäße Schallintensitätsdetektor ermöglicht die Lokalisierung von Schallquellen und die Messung von deren Intensität in geschlossenen und schwach gedämpften Räumen in zeit- und kostengünstiger Weise, was mit herkömmlichen Verfahren (z.B. bei Einhängen von Matten zur Vergrößerung der Dämpfung) nicht möglich ist.

Weiter hat der erfindungsgemäße Schallintensitätsdetektor zusätzlich ein als äußeres Gehäuse gestaltetes zweites Gehäuse, wobei zwischen dem ersten Gehäuse und dem zweitem Gehäuse ein Zwischenraum ausgebildet ist, der ein zweites Schallfenster aufweist, das das erste Schallfenster zumindest teilweise umgibt. Im Innenraumbereich des Zwischenraums ist mindestens ein zweiter Lautsprecher angeordnet. Ferner ist mindestens ein Paar zueinander benachbarter zweiter Mikrophone vorgesehen, bei dem das eine Mikrophon in der Nähe der Berandung des ersten Schallfensters im Bereich des ersten Gehäuses und das andere in der Nähe der Berandung des zweiten Schallfensters im Bereich des Zwischenraums angeordnet ist. Die Steuer- und Regeleinrichtung ist dazu eingerichtet, mittels von dem Paar zweiter Mikrophone erzeugter Messsignale den zweiten Lautsprecher zur.Angleichung des Schallwechselfeldes an den Positionen der beiden Mikrophone des Paares zweiter Mikrophone anzusteuern.

Mit Hilfe des äußeren Gehäuses, dem zweiten Lautsprecher und den zweiten Mikrophonen wird erreicht, dass die Schallschnelle im Bereich der Berandung des ersten Schallfensters verschwindet oder zumindest sehr klein wird. Daher können Geräusche nicht über die Randzone des ersten Schallfensters in das erste Gehäuse eindringen, und die erwünschten Freifeldbedingungen lassen sich mit noch höherer Genauigkeit realisieren. Wie zuvor gilt auch in Bezug auf das zweite Gehäuse, den zweiten Lautsprecher und die zweiten Mikrophone, dass eine Erhöhung der Zahl der zweiten Mikrophone und der zweiten Lautsprecher eine weitere Verbesserung der Freifeldbedingungen ergibt.

Vorzugsweise ist der Zwischenraum durch Zwischenwände in mehrere Kammern unterteilt, die jeweils einen zweiten Lautsprecher und ein Schallfenster aufweisen und denen jeweils eine Paar zweiter Mikrophone zugeordnet ist, wobei die jeweiligen Schallfenster zusammen das zweite Schallfenster bilden. Bei dieser Ausgestaltung wird also der Zwischenraum in mehrere Unterabschnitte aufgeteilt, in denen jeweils relativ übersichtliche Bedingungen herrschen, sodass die Regelung zur Erzeugung eines Freifeldes insgesamt einfacher ist.

Das erste Schallfenster und das zweite Schallfenster liegen vorzugsweise in derselben Ebene. Bei einer bevorzugten Ausführungsform sind das erste Gehäuse und das zweite Gehäuse rohrförmig und weisen vorzugsweise eine gemeinsame Längsachse auf, wobei das erste Schallfenster und das zweite Schallfenster an einer Stirnseite angeordnet sind. Dabei sind das erste Gehäuse und das zweite Gehäuse vorzugsweise gleich lang.

Bei einer derartigen Gestaltung kann z.B. genau ein erster Lautsprecher vorgesehen sein, der in der Nähe der dem ersten Schallfenster gegenüberliegenden Endseite des ersten Gehäuses angeordnet ist. Die Geometrie und der Aufbau des Schallintensitätdetektors sind bei einer solchen Gestaltung einfach.

Bei einer anderen Gestaltung können auch zwei erste Lautsprecher vorgesehen sein, die an der Wandung zwischen dem ersten Gehäuse und dem zweiten Gehäuse angeordnet sind und in den Innenraumbereich des ersten Gehäuses schallen.

Bei einer Variante der Erfindung hat der Schallintensitätsdetektor ein erstes Gehäuse, das ein erstes Schallfenster aufweist, mindestens einen im Innenraumbereich des ersten Gehäuses angeordneten ersten Lautsprecher, ein erstes Mikrophon im Innenraumbereich des ersten Gehäuses sowie eine Steuer- und Regeleinrichtung, die dazu eingerichtet ist, mittels des ersten Mikrophons Messsignale für den Schallwechseldruck im Innenraumbereich des ersten Gehäuses zu erzeugen und mittels dieser Messsignale den ersten Lautsprecher zur Erzeugung eines Freifeldes im Innenraumbereich des ersten Gehäuses anzusteuern. Dabei genügt ein einziges erstes Mikrophon, denn wegen der Ansteuerung des ersten Lautsprechers ist die Schallschnelle am Ort des Lautsprechers bekannt, weshalb der erste Lautsprecher insgesamt so angesteuert werden kann, dass Freifeldbedingungen herrschen. Auch bei dieser Varianten ist ein äußeres (zweites) Gehäuse vorgesehen, wie bereits erläutert.

Bei dem erfindungsgemäßen Verfahren zum Messen der Schallintensität einer zu lokalisierenden Schallquelle wird der für die Schallquelle infrage kommende Bereich mit einem Schallintensitätsdetektor abgefahren, der ein Schallfenster aufweist und in dem mit Hilfe eines ersten Lautsprechers und mindestens eines ersten Mikrophons erzeugte Freifeldbedingungen herrschen. Dabei wird ein Schallintensitätsdetektor benutzt, in dem zusätzlich die Schallschnelle im Randbereich des Schallfensters mit Hilfe mindestens eines zweiten Lautsprechers und zweiter Mikrophone reduziert wird und der von erfindungsgemäßer Konstruktion ist.

Der erfindungsgemäße Schallintensitätsdetektor und das erfindungsgemäße Verfahren erlauben es, Schallquellen in Innenräumen zu lokalisieren, z.B. in Flugzeugen, Kraftfahrzeugen, Schiffen oder Eisenbahnen. Es ist nicht erforderlich, Dämmmaterialien im Innenraum anzuordnen, um so auf aufwendige Weise Freifeldbedingungen zu erzeugen. Die Erfindung ermöglicht daher direkte, schnelle und kostengünstige Messungen, die außerdem noch eine hohe Genauigkeit haben.

Im Folgenden wird die Erfindung anhand von Ausführungsbeispielen näher erläutert.

Die Zeichnungen zeigen in
- Figur 1: einen schematischen Längsschnitt durch eine erste Aus- führungsform des erfindungsgemäßen Schallintensitäts- detektors,
- Figur 2: eine Vorderansicht der Ausführungsform aus Figur 1,
- Figur 3: eine perspektivische Ansicht der Ausführungsform aus Figur 1,
- Figur 4: einen schematischen Längsschnitt durch eine zweite Ausführungsform des erfindungsgemäßen Schallintensitätsdetektors,
- Figur 5: eine Vorderansicht der Ausführungsform aus Figur 4 und
- Figur 6: eine perspektivische Ansicht der Ausführungsform aus Figur 4.

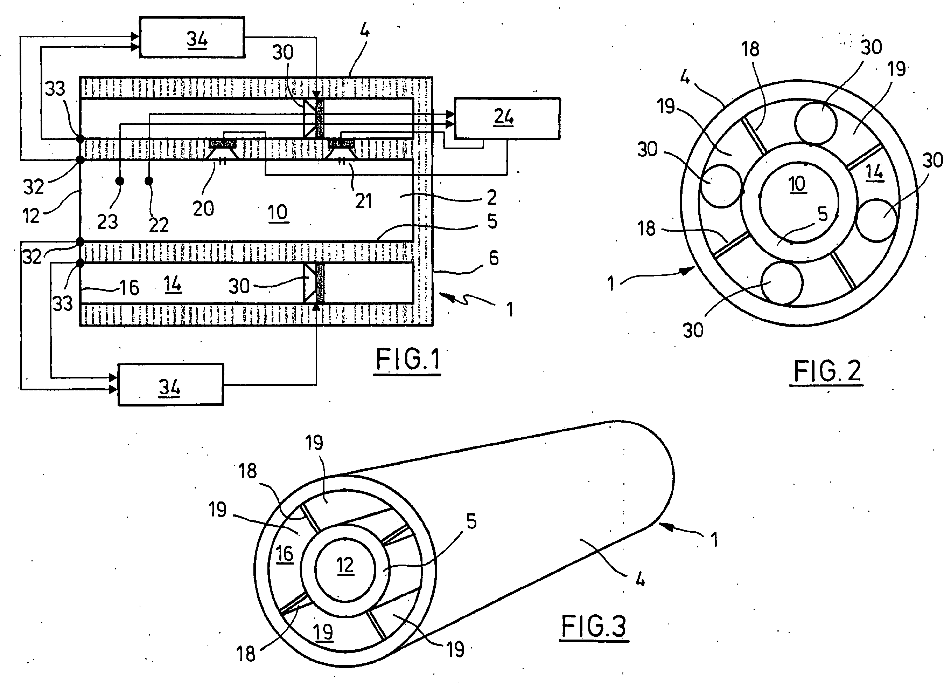

In Figur 1 ist in schematischem Längsschnitt eine erste Ausführungsform eines Schallintensitätsdetektors dargestellt. Der Schallintensitätsdetektor 1 hat ein schallhartes erstes Gehäuse (inneres Gehäuse) 2 und ein schallhartes zweites Gehäuse (äußeres Gehäuse) 4, die durch einen Wandung 5 (Außenwand des ersten Gehäuses 2) getrennt sind und eine gemeinsame Rückwand 6 aufweisen. Das erste Gehäuse 2 und das zweite Gehäuse 4 besitzen zylindrische Grundformen und sind auf einer gemeinsamen Längsachse angeordnet.

In dem ersten Gehäuse 2 ist ein Innenraumbereich 10 ausgebildet, der sich an der der Rückwand 6 gegenüberliegenden Stirnseite zu einem ersten Schallfenster 12 öffnet. Zwischen dem zweiten Gehäuse 4 und dem ersten Gehäuse 2 befindet sich ein Zwischenraum 14, der an der der Rückwand 6 gegenüberliegenden Stirnseite ein zweites Schallfenster 16 aufweist.

Im Ausführungsbeispiel ist der Zwischenraum 14 durch Zwischenwände 18 in vier gleich große Kammern 19 unterteilt, siehe Figur 2 und Figur 3. Jede dieser Kammern 19 hat ein Schallfenster, wobei diese Schallfenster zusammen das zweite Schallfenster 16 bilden.

In der Wandung 5 befinden sich zwei erste Lautsprecher 20 und 21, die in den Innenraumbereich 10 des ersten Gehäuses 2 abstrahlen. Ferner ist im Innenraumbereich 10 des ersten Gehäuses 2 ein Paar erster Mikrophone angeordnet, nämlich die Mikrophone 22 und 23. Die beiden Lautsprecher 20 und 21 sowie die beiden Mikrophone 22 und 23 sind mit einer Steuer- und Regeleinrichtung 24 verbunden.

In jeder der Kammern 19 befindet sich ein zweiter Lautsprecher 30. Ferner ist für jede Kammer 19 ein Paar zueinander benachbarter zweiter Mikrophone 32 und 33 vorgesehen, wobei das Mikrophon 32 an der Berandung des ersten Schallfensters 12 im Bereich des ersten Gehäuses 2 und das Mikrophon 33 an der Berandung des zweiten Schallfensters 16 im Bereich des Zwischenraums 14 angeordnet ist. Die beiden Mikrophone 32 und 33 haben im Ausführungsbeispiel einen Abstand, der der relativ großen Dicke der Wandung 5 entspricht. Für jede Kammer 19 sind der zweite Lautsprecher 30 und die zweiten Mikrophone 32 und 33 mit einer Steuer- und Regeleinrichtung 34 verbunden.

Vorzugsweise sind die Steuer- und Regeleinrichtung 24 sowie die Steuer- und Regeleinrichtungen 34 in einer gemeinsamen Steuer- und Regeleinrichtung integriert.

Der Schallintensitätsdetektor 1 enthält also zwei ineinanderliegende Rohre, nämlich das erste Gehäuse 2 und das zweite Gehäuse 4. Das innere Rohr wird zur eigentlichen Messung der Schallintensität genutzt. In diesem Rohr müssen Freifeldbedingungen produziert werden. Zu diesem Zweck befinden sich die beiden ersten Mikrophone 22 und 23 in dem inneren Rohr, über die der Schallwechseldruck und die Schallschnelle (Gradient des Schallwechseldrucks) bestimmt werden können. Die beiden seitlich in der Wandung 5 installierten ersten Lautsprecher 20 und 21 werden über die Steuer- und Regeleinrichtung 24 so angesteuert, dass in einem Großteil des ersten Gehäuses 2 Freifeldbedingungen entstehen, nämlich im Wesentlichen ab dem Punkt, wo sich ein eindimensionales Schallfeld ausgebreitet hat. Dies hat zur Folge, dass nicht nur von der sich vor dem Schallfenster 12 befindenden Struktur (Schallquelle) produzierte Schallintensitäten gemessen werden, sondern auch noch Schallintensitäten, die durch einen Spalt zwischen der Struktur und dem ersten Schallfenster 12 eindringen. Indem der Spalt so klein wie möglich gehalten wird, ohne jedoch die Struktur zu berühren, kann dieser störende Effekt vermindert werden.

Des Weiteren sind die zweiten Lautsprecher 30 in dem Zwischenraum 14 angebracht, die mit jeweils zwei Mikrophonen 32 und 33 über die Steuer- und Regeleinrichtung 34 dafür sorgen, dass der Schallwechseldruck auf der Innenseite und der Außenseite der Wandung 5 gleich ist. Somit ist die Schallschnelle am ersten Schallfenster 12 in radialer Richtung auf Null gezwungen, und in dem ersten Gehäuse 2 werden nur Schallintensitäten gemessen, die auch unmittelbar vor dem ersten Schallfenster 12 entstehen.

Während bereits durch die in dem ersten Gehäuse 2 erzeugten Freifeldbedingungen gute Messbedingungen realisiert werden, bewirkt das zweite Gehäuse 4 mit den damit in Verbindung stehenden Komponenten eine weitere Steigerung der Messgenauigkeit und der Lokalisierungsmöglichkeiten, die der Schallintensitätsdetektor 1 bietet.

Vorzugsweise werden die Messungen so durchgeführt, dass der Schallintensitätsdetektor 1 mit den Schallfenstern 12 und 16 in geringem Abstand an der zu untersuchenden Struktur entlang geführt wird. Auf diese Weise lassen sich Schallquellen unterschiedlicher Frequenzen auch in geschlossenen Räumen und bei vorhandenem Untergrundpegel lokalisieren.

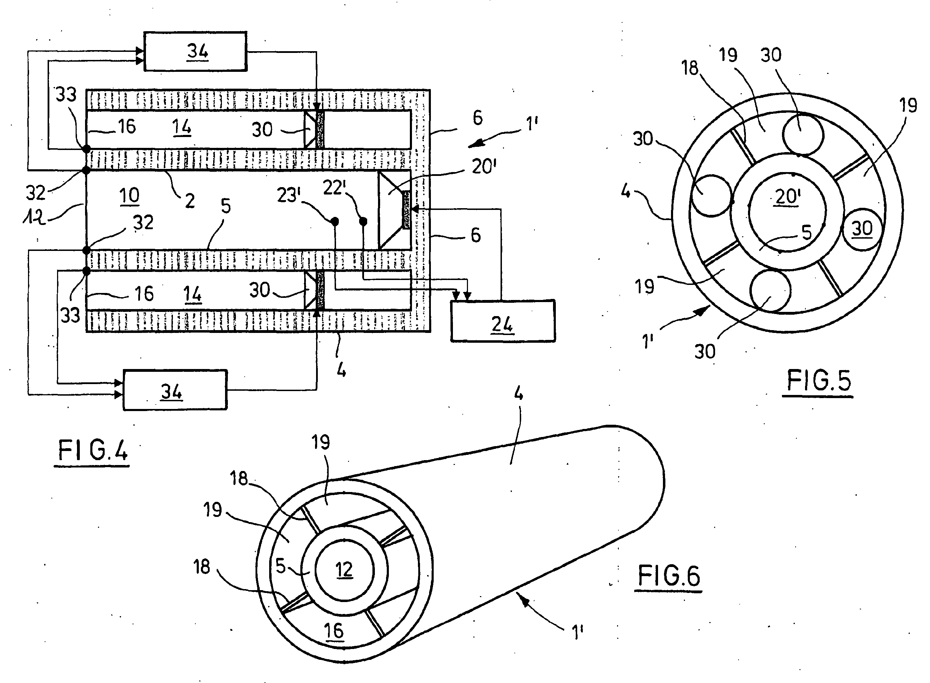

Die in den Figuren 4 bis 6 dargestellte Ausführungsform des Schallintensitätsdetektors, der hier mit 1' bezeichnet ist, ist ähnlich aufgebaut wie die Ausführungsform gemäß den Figuren 1 bis 3. Daher sind gleiche oder vergleichbare Teile mit den gleichen Bezugszeichen versehen.

Wie die Figur 4 zeigt, hat jedoch der Schallintensitätsdetektor 1' anstelle von zwei ersten Lautsprechern nur einen ersten Lautsprecher 20', der an der Rückwand 6 angeordnet ist und in den Innenraumbereich 10 abstrahlt. Die beiden ersten Mikrophone, hier mit 22' und 23' bezeichnet, befinden sich an anderen Positionen als die ersten Mikrophone der Ausführungsform gemäß Figur 1.

Bei dem Schallintensitätsdetektor 1' wird ebenfalls das zuvor beschriebene Prinzip benutzt. Der erste Lautsprecher 20' am Ende des inneren Rohres hat die Aufgabe, Freifeldbedingungen zu erzeugen. Hierzu ist es notwendig, den ersten Lautsprecher 20' über eine Impedanzbedingung zu regeln. Dies kann erreicht werden, indem der Schallwechseldruck und die Schallschnelle vor dem ersten Lautsprecher 20' durch die beiden ersten Mikrophone 22' und 23' ermittelt werden. Es ist auch denkbar, nur ein erstes Mikrophon zu benutzen, da die Ansteuerung des ersten Lautsprechers den zweiten Schallwechseldruck ergibt. Da die Impedanz durch den Schallwechseldruck und die Schallschnelle bestimmt ist, kann über eine Rückkopplung der erste Lautsprecher entsprechend angesteuert werden.

Die Wirkungsweise des äußeren Rohres mit den zweiten Lautsprechern und den zugeordneten zweiten Mikrophonen ist in der Ausführungsform gemäß den Figuren 4 bis 6 die gleiche wie bei der Ausführungsform gemäß den Figuren 1 bis 3. Die Schallintensitätsdetektoren 1 und 1' werden auch in der gleichen Weise angewendet.

## Patentansprüche

1. Schallintensitätsdetektor, mit
- einem ersten Gehäuse (2) mit einer Rückwand (6), das ein der Rückwand (6) gegenüberliegendes erstes Schallfenster (12) aufweist,
- mindestens einem im Innenraumbereich (10) des ersten Gehäuses (2) angeordneten ersten Lautsprecher (20, 21; 20'),
- mindestens einem Paar erster Mikrophone (22, 23; 22', 23') im Innenraumbereich (10) des ersten Gehäuses (2),
- einer Steuer- und Regeleinrichtung (24, 34), die dazu eingerichtet ist, mittels des Paares erster Mikrophone (22, 23; 22', 23') Messsignale für den Schallwechseldruck und die Schallschnelle im Innenraumbereich (10) des ersten Gehäuses (2) zu erzeugen und mittels dieser Messsignale den ersten Lautsprecher (20, 21; 20') zur Erzeugung eines Freifeldes im Innenraumbereich (10) des ersten Gehäuses (2) anzusteuern,
**gekennzeichnet durch**
- ein als äußeres Gehäuse gestaltetes zweites Gehäuse (4) mit einer Rückwand (6), wobei zwischen dem ersten Gehäuse (2) und dem zweiten Gehäuse (4) ein Zwischenraum (14) ausgebildet ist, der ein zweites Schallfenster (16) aufweist, das das erste Schallfenster (12) zumindest teilweise umgibt und der Rückwand (6) gegenüberliegt,
- mindestens einen im Innenraumbereich des Zwischenraums (14) angeordneten zweiten Lautsprecher (30),
- mindestens ein Paar zueinander benachbarter zweiter Mikrophone (32, 33), bei dem das eine Mikrophon (32) in der Nähe der Berandung des ersten Schallfensters (12) im Bereich des ersten Gehäuses (2) und das andere in der Nähe der Berandung des zweiten Schallfensters (16) im Bereich des Zwischenraums (14) angeordnet ist,
- wobei die Steuer- und Regeleinrichtung (24, 34) dazu eingerichtet ist, mittels von dem Paar zweiter Mikrophone (32, 33) erzeugter Messsignale den zweiten Lautsprecher (30) zur Angleichung des Schallwechselfeldes an den Positionen der beiden Mikrophone (32, 33) des Paares zweiter Mikrophone anzusteuern.

2. Schallintensitätsdetektor nach Anspruch 1, **dadurch gekennzeichnet, dass** der Zwischenraum (14) durch Zwischenwände (18) in mehrere Kammern (19) unterteilt ist, die jeweils einen zweiten Lautsprecher (30) und ein Schallfenster aufweisen und denen jeweils ein Paar zweiter Mikrophone (32, 33) zugeordnet ist, wobei die jeweiligen Schallfenster zusammen das zweite Schallfenster (16) bilden.

3. Schallintensitätsdetektor nach Anspruch 1 oder 2, **dadurch gekennzeichnet, dass** das erste Schallfenster (12) und das zweite Schallfenster (16) in derselben Ebene liegen.

4. Schallintensitätsdetektor nach einem der Ansprüche 1 bis 3, **dadurch gekennzeichnet, dass** das erste Gehäuse (2) und das zweite Gehäuse (4) rohrförmig sind und vorzugsweise eine gemeinsame Längsachse aufweisen, wobei das erste Schallfenster (12) und das zweite Schallfenster (16) an einer Stirnseite angeordnet sind.

5. Schallintensitätsdetektor nach Anspruch 4, **dadurch gekennzeichnet, dass** das erste Gehäuse (2) und das zweite Gehäuse (4) gleich lang sind.

6. Schallintensitätsdetektor nach Anspruch 4 oder 5, **dadurch gekennzeichnet, dass** genau ein erster Lautsprecher (20') vorgesehen ist, der in der Nähe der dem ersten Schallfenster (12) gegenüberliegenden Endseite des ersten Gehäuses (2) angeordnet ist.

7. Schallintensitätsdetektor nach Anspruch 4 oder 5, **dadurch gekennzeichnet, dass** zwei erste Lautsprecher (20, 21) vorgesehen sind, die an der Wandung (5) zwischen dem ersten Gehäuse (2) und dem zweiten Gehäuse (4) angeordnet sind und in den Innenraumbereich (10) des ersten Gehäuses (2) schallen.

8. Schallintensitätsdetektor, mit
- einem ersten Gehäuse (2) mit einer Rückwand (6), das ein der Rückwand gegenüberliegendes erstes Schallfenster (12) aufweist,
- mindestens einem im Innenraumbereich (10) des ersten Gehäuses (2) angeordneten ersten Lautsprecher (20'),
- einem ersten Mikrophon (23', 22') im Innenraumbereich (10) des ersten Gehäuses (2),
- einer Steuer- und Regeleinrichtung (24, 34), die dazu eingerichtet ist, mittels des ersten Mikrophons (23',22') Messsignale für den Schallwechseldruck im Innenraumbereich (10) des ersten Gehäuses (2) zu erzeugen und mittels dieser Messsignale den ersten Lautsprecher zur Erzeugung eines Freifeldes im Innenraumbereich des ersten Gehäuses (2) anzusteuern,
**gekennzeichnet durch**
- ein als äußeres Gehäuse gestaltetes zweites Gehäuse (4) mit einer Rückwand (6), wobei zwischen dem ersten Gehäuse (2) und dem zweiten Gehäuse (4) ein Zwischenraum (14) ausgebildet ist, der ein zweites Schallfenster (16) aufweist, das das erste Schallfenster (12) zumindest teilweise umgibt und der Rückwand (6) gegenüberliegt,
- mindestens einen im Innenraumbereich des Zwischenraums angeordneten zweiten Lautsprecher (3),
- mindestens ein Paar zueinander benachbarter zweiter Mikrophone (32, 33), bei dem das eine Mikrophon (32) in der Nähe der Berandung des ersten Schallfensters (12) im Bereich des ersten Gehäuses (2) und das andere in der Nähe der Berandung des zweiten Schallfensters (16) im Bereich des Zwischenraums (14) angeordnet ist,
- wobei die Steuer- und Regeleinrichtung (24, 34) dazu eingereichtet ist, mittels von dem Paar zweiter Mikrophone (32,33) erzeugter Messsignale den zweiten Lautsprecher (30) zur Angleichung des Schallwechselfeldes an den Positionen der beiden Mikrophone des Paares zweiter Mikrophone (32, 33) anzusteuern.

9. Schallintensitätsdetektor nach Anspruch 8, **gekennzeichnet durch** die in einem der Ansprüche 2 bis 7 angeführten Merkmale.

10. Verfahren zum Messen der Schallintensität einer zu lokalisierenden Schallquelle, wobei der für die Schallquelle in Frage kommende Bereich mit einem Schallintensitätsdetektor (1; 1') abgefahren wird, der ein Schallfenster (12) aufweist und in dem mit Hilfe eines ersten Lautsprechers (20, 21; 20') und mindestens eines ersten Mikrophons (22, 23; 22', 23') erzeugte Freifeldbedingungen herrschen und in dem die Schallschnelle im Randbereich des Schallfensters (12) mit Hilfe mindestens eines zweiten Lautsprechers (30) und zweiter Mikrophone (32, 33) reduziert wird, und wobei der Schallintensitätsdetektor (1; 1') die Merkmale des Anspruchs 1 oder 8 aufweist.

## Claims

1. Sound intensity detector, having
- a first housing (2) with a backplane (6), which has a first sound window (12) opposite the backplane (6),
- at least one first loudspeaker (20, 21; 20') which is arranged in the interior region (10) of the first housing (2),
- at least one pair of first microphones (22, 23; 22', 23') in the interior region (10) of the first housing (2),
- a control and regulatory device (24, 34) which is set up to use the pair of first microphones (22, 23; 22', 23') to produce measurement signals for the alternating sound pressure and the particle velocity in the interior region (10) of the first housing (2) and to use said measurement signals to drive the first loudspeaker (20, 21; 20') to produce a free field in the interior region (10) of the first housing (2),
**characterized by**
- a second housing (4), in the form of an outer housing, with a backplane (6), wherein the first housing (2) and the second housing (4) have an interspace (14) formed between them which has a second sound window (16) which at least partially surrounds the first sound window (12) and is opposite the backplane (6),
- at least one second loudspeaker (30) arranged in the interior region of the interspace (14),
- at least one pair of adjacent second microphones (32, 33), in which one microphone (32) is arranged in proximity to the boundary of the first sound window (12) in the region of the first housing (2) and the other microphone is arranged in proximity to the boundary of the second sound window (16) in the region of the interspace (14),
- wherein the control and regulatory device (24, 34) is set up to use measurement signals produced by the pair of second microphones (32, 33) to drive the second loudspeaker (30) to assimilate the alternating sound field at the positions of the two microphones (32, 33) in the pair of second microphones.

2. Sound intensity detector according to Claim 1, **characterized in that** the interspace (14) is divided by partitions (18) into a plurality of chambers (19) which each have a second loudspeaker (30) and a sound window and which each have an associated pair of second microphones (32, 33), wherein the respective sound windows together form the second sound window (16).

3. Sound intensity detector according to Claim 1 or 2, **characterized in that** the first sound window (12) and the second sound window (16) are located in the same plane.

4. Sound intensity detector according to one of Claims 1 to 3, **characterized in that** the first housing (2) and the second housing (4) are tubular and preferably have a common longitudinal axis, wherein the first sound window (12) and the second sound window (16) are arranged on a front side.

5. Sound intensity detector according to Claim 4, **characterized in that** the first housing (2) and the second housing (4) are of the same length.

6. Sound intensity detector according to Claim 4 or 5, **characterized in that** precisely one first loudspeaker (20') is provided which is arranged in proximity to that end side of the first housing (2) which is opposite the first sound window (12).

7. Sound intensity detector as claimed in Claim 4 or 5, **characterized in that** two first loudspeakers (20, 21) are provided which are arranged on the wall (5) between the first housing (2) and the second housing (4) and emit sound into the interior region (10) of the first housing (2).

8. Sound intensity detector, having
- a first housing (2) with a backplane (6), which has a first sound window (12) opposite the backplane,
- at least one first loudspeaker (20') arranged in the interior region (10) of the first housing (2),
- a first microphone (23', 22') in the interior region (10) of the first housing (2),
- a control and regulatory device (24, 34) which is set up to use the first microphone (23', 22') to produce measurement signals for the alternating sound pressure in the interior region (10) of the first housing (2) and to use said measurement signals to drive the first loudspeaker to produce a free field in the interior region of the first housing (2), **characterized by**
- a second housing (4), in the form of an outer housing, with a backplane (6), wherein the first housing (2) and the second housing (4) have an interspace (14) formed between them which has a second sound window (16) which at least partially surrounds the first sound window (12) and is opposite the backplane (6),
- at least one second loudspeaker (30) arranged in the interior region of the interspace,
- at least one pair of adjacent second microphones (32, 33), in which one microphone (32) is arranged in proximity to the boundary of the first sound window (12) in the region of the first housing (2) and the other microphone is arranged in proximity to the boundary of the second sound window (16) in the region of the interspace (14),
- wherein the control and regulatory device (24, 34) is set up to use measurement signals produced by the pair of second microphones (32, 33) to drive the second loudspeaker (30) to assimilate the alternating sound field at the positions of the two microphones in the pair of second microphones (32, 33).

9. Sound intensity detector according to Claim 8, **characterized by** the features presented in one of Claims 2 to 7.

10. Method for measuring the sound intensity of a sound source which is to be localized, wherein the region which is a possibility for the sound source has a sound intensity detector (1; 1') taken through it which has a sound window (12) and in which free field conditions produced by means of a first loudspeaker (20, 21; 20') and at least one first microphone (22, 23; 22' 23') prevail and in which the particle velocity in the border region of the sound window (12) is reduced by means of at least one second loudspeaker (30) and second microphones (32, 33), and wherein the sound intensity detector (1; 1') has the features of Claim 1 or 8.

## Revendications

1. Sonde d'intensité acoustique, comprenant
- un premier boîtier (2) avec une paroi arrière (6), qui présente une première fenêtre acoustique (12) située à l'opposé de la paroi arrière (6),
- au moins un premier haut-parleur (20, 21; 20') disposé dans l'espace intérieur (10) du premier boîtier (2),
- au moins une paire de premiers microphones (22, 23; 22', 23') dans l'espace intérieur (10) du premier boîtier (2),
- un dispositif de commande et de régulation (24, 34) qui est conçu pour générer, au moyen de la paire de premiers microphones (22, 23; 22', 23'), des signaux de mesure pour la pression acoustique et la vitesse acoustique dans l'espace intérieur (10) du premier boîtier (2), et pour activer le premier haut-parleur (20, 21; 20') à l'aide de ces signaux de mesure, en vue de générer un champ libre dans l'espace intérieur (10) du premier boîtier (2),
**caractérisée par le fait qu'**elle comporte
- un deuxième boîtier (4) agencé sous forme de boîtier extérieur, avec une paroi arrière (6), un espace intermédiaire (14) étant formé entre le premier boîtier (2) et le deuxième boîtier (4), qui présente une deuxième fenêtre acoustique (16), laquelle entoure au moins en partie la première fenêtre acoustique (12) et est située à l'opposé de la paroi arrière (6),
- au moins un deuxième haut-parleur (30) disposé à l'intérieur de l'espace intermédiaire (14),
- au moins une paire de deuxièmes microphones (32, 33) voisins l'un de l'autre, où l'un (32) des microphones est disposé à proximité du bord de la première fenêtre acoustique (12), dans la région du premier boîtier (2), et l'autre est placé à proximité du bord de la deuxième fenêtre acoustique (16), dans la région de l'espace intermédiaire (14),
- le dispositif de commande et de régulation (24, 34) étant conçu pour activer le deuxième haut-parleur (30) au moyen de signaux de mesure produits par la paire de deuxièmes microphones (32, 33), en vue d'égaliser le champ acoustique aux emplacements des deux microphones (32, 33) de la paire de deuxièmes microphones.

2. Sonde d'intensité acoustique selon la revendication 1, **caractérisée par le fait que** l'espace intermédiaire (14) est divisé par des cloisons (18) en plusieurs chambres (19) qui présentent chacune un deuxième haut-parleur (30) et une fenêtre acoustique et auxquelles est associée respectivement une paire de deuxièmes microphones (32, 33), les fenêtres acoustiques respectives formant ensemble la deuxième fenêtre acoustique (16).

3. Sonde d'intensité acoustique selon la revendication 1 ou 2, **caractérisée par le fait que** la première fenêtre acoustique (12) et la deuxième fenêtre acoustique (16) se situent dans le même plan.

4. Sonde d'intensité acoustique selon une des revendications 1 à 3, **caractérisée par le fait que** le premier boîtier (2) et le deuxième boîtier (4) ont une forme tubulaire et présentent de préférence un axe longitudinal commun, la première fenêtre acoustique (12) et la deuxième fenêtre acoustique (16) étant placées sur une face frontale.

5. Sonde d'intensité acoustique selon la revendication 4, **caractérisée par le fait que** le premier boîtier (2) et le deuxième boîtier (4) ont la même longueur.

6. Sonde d'intensité acoustique selon la revendication 4 ou 5, **caractérisée par le fait qu'**il est prévu exactement un premier haut-parleur (20') qui est disposé à proximité de l'extrémité du premier boîtier (2) qui est située à l'opposé de la première fenêtre acoustique (12).

7. Sonde d'intensité acoustique selon la revendication 4 ou 5, **caractérisée par le fait qu'**il est prévu deux premiers haut-parleurs (20, 21) qui sont disposés sur la paroi (5) séparant le premier boîtier (2) et le deuxième boîtier (4) et résonnent dans l'espace intérieur (10) du premier boîtier (2).

8. Sonde d'intensité acoustique, comprenant
- un premier boîtier (2) avec une paroi arrière (6), qui présente une première fenêtre acoustique (12) située à l'opposé de la paroi arrière,
- au moins un premier haut-parleur (20') disposé dans l'espace intérieur (10) du premier boîtier (2),
- un premier microphone (23', 22') dans l'espace intérieur (10) du premier boîtier (2),
- un dispositif de commande et de régulation (24, 34) qui est conçu pour générer, au moyen du premier microphone (23', 22'), des signaux de mesure pour la pression acoustique dans l'espace intérieur (10) du premier boîtier (2), et pour activer le premier haut-parleur à l'aide de ces signaux de mesure, en vue de générer un champ libre dans l'espace intérieur du premier boîtier (2),
**caractérisée par le fait qu'**elle comporte
- un deuxième boîtier (4) agencé sous forme de boîtier extérieur, avec une paroi arrière (6), un espace intermédiaire (14) étant formé entre le premier boîtier (2) et le deuxième boîtier (4), qui présente une deuxième fenêtre acoustique (16), laquelle entoure au moins en partie la première fenêtre acoustique (12) et est située à l'opposé de la paroi arrière (6),
- au moins un deuxième haut-parleur (30) disposé à l'intérieur de l'espace intermédiaire,
- au moins une paire de deuxièmes microphones (32, 33) voisins l'un de l'autre, où l'un (32) des microphones est disposé à proximité du bord de la première fenêtre acoustique (12), dans la région du premier boîtier (2), et l'autre est placé à proximité du bord de la deuxième fenêtre acoustique (16), dans la région de l'espace intermédiaire (14),
- le dispositif de commande et de régulation (24, 34) étant conçu pour activer le deuxième haut-parleur (30) au moyen de signaux de mesure produits par la paire de deuxièmes microphones (32, 33), en vue d'égaliser le champ acoustique aux emplacements des deux microphones de la paire de deuxièmes microphones (32, 33).

9. Sonde d'intensité acoustique selon la revendication 8, **caractérisée par** les caractéristiques énoncées dans l'une des revendications 2 à 7.

10. Procédé de mesure de l'intensité acoustique d'une source sonore à localiser, la zone qui peut contenir la source sonore étant parcourue avec une sonde d'intensité acoustique (1; 1') qui présente une fenêtre acoustique (12) et dans laquelle règnent des conditions de champ libre, générées à l'aide d'un premier haut-parleur (20, 21; 20') et d'au moins un premier microphone (22, 23; 22', 23'), et dans laquelle la vitesse acoustique est réduite dans la région du bord de la fenêtre acoustique (12), à l'aide d'au moins un deuxième haut-parleur (30) et de deux microphones (32, 33), et la sonde d'intensité acoustique (1; 1') présentant les caractéristiques de la revendication 1 ou 8.
